# EUROPEAN PATENT SPECIFICATION

(11) **EP 3 173 535 B1**
(45) Date of publication and mention of the grant of the patent: **08.09.2021**
(21) Application number: 16199585.7
(22) Date of filing: 18.11.2016
(51) Int. Cl.: E02F 3/36

(54) **APPARATUS AND METHOD FOR COUPLING WORK TOOL TO A MACHINE**
VORRICHTUNG UND VERFAHREN ZUR KOPPLUNG EINES ARBEITSWERKZEUGS MIT EINER MASCHINE
APPAREIL ET PROCÉDÉ DE COUPLAGE D'OUTIL DE TRAVAIL À UNE MACHINE

(30) Priority: 24.11.2015 GB 201520735
(43) Date of publication of application: 31.05.2017
(73) Proprietor: Caterpillar Work Tools B. V., 5232 BJ 's-Hertogenbosch (NL)
(72) Inventor: DINGS, Henricus J., 5351AR Kerkdriel (NL)
(74) Representative: BRP Renaud & Partner mbB Rechtsanwälte Patentanwälte Steuerberater

(56) References cited:
- EP-A2- 1 318 242
- US-A- 5 400 531
- US-A- 5 607 251
- US-A1- 2003 133 779
- US-A1- 2004 245 002
- US-A1- 2005 169 703

## Description

### Technical Field

The present disclosure relates to engaging work tools to machines, and more particularly it relates to an apparatus and a method for assembling a work tool to an arm assembly of a machine.

### Background

Machines, such as, hydraulic excavators, hydraulic shovels, backhoe loaders and the like, are often required to perform different kinds of work on a work site. Therefore, different work tools, such as buckets, hammers, rippers, and grapples, may have to be engaged with an arm assembly (including for example, sticks and booms) of the machine. It is known that the process of removing one work tool from the arm assembly and replacing the work tool with a different work tool may be a time consuming and difficult process. Quick couplers have been employed to enable quick engagement of the stick and the work tool and the quick couplers do, to an extent, reduce effort required for removing the work tool and replacing it. However, such quick couplers add weight to the stick end and build up the stick height/length. As a result, the machine's capabilities may be compromised.

For example, US Patent 5,400,531 A discloses an excavator or earth-working device. The earth working device includes a forked dipper arm, a linkage and an earth-working implement pivotally connected to the forked dipper arm and linkage. The implement is attached to a dipper arm and linkage of the earth-working device by a so-called "quick-hitch" connection to allow interchange between various earth-working implements. A safety device may also be provided on the "quick-hitch" connection to prevent accidental detachment of the implement from the dipper arm and linkage. US2004/245002 and US2003/133779 disclose similar "quick" hitch connections.

### Summary of the Disclosure

The present disclosure provides an apparatus for coupling a work tool to an arm assembly of a machine. The work tool includes a first and second tool engagement means. The arm assembly includes first and second arms. The apparatus includes a first coupling means, a pin member, that engages with the first arm and the first tool engagement means. The apparatus further includes a second coupling means, a pin member, that engages with the second arm and the second tool engagement means. The apparatus further includes an actuator coupled to and arranged to move the first and second coupling means between a retracted position, in which the first and/or second coupling means is disengaged from the first and/or second tool engagement means, and an extended position, in which the first and second coupling means are engaged with the first and second tool engagement means, The actuator includes a first member and a second member. A locking sleeve is mounted at least partially around the actuator. The locking sleeve being moveable into a locked position to prevent the first and second coupling means from moving into the retracted position from the extended position. The first member is moveable relative to a second member. The locking sleeve is mounted at least partially around the first and/or second member and the first member is moveable relative to the second member. The locking sleeve is mounted at least partially around the first and/or second member and the first member includes a stop against which the locking sleeve abuts when in the locked position.

The present disclosure further provides a machine comprising the aforementioned apparatus. In a further embodiment, the present disclosure may further provide an arrangement comprising aforementioned apparatus, arm assembly and work tool.

The present disclosure further provides a method of coupling a work tool to an arm assembly of a machine. The work tool having first and second tool engagement means and the arm assembly having first and second arms. The method includes engaging a first coupling means with the first arm and the first tool engagement means. The method further includes engaging a second coupling means with the second arm. The method further includes moving an actuator to an extended position to engage the second coupling means to the second tool engagement means, the actuator includes a first member and a second member. The method further includes moving a locking sleeve to a locked position to prevent the first and second coupling means from moving into the retracted position from the extended position. The step of moving the locking sleeve includes rotating the locking sleeve around the actuator to abut against an abutment portion of the second member.

### Brief Description of the Drawings

FIG. 1 illustrates a side view of a machine equipped with an arm assembly, according to an embodiment of the present disclosure;
FIG. 2 illustrates the arm assembly equipped with a coupling apparatus for assembling a work tool to the arm assembly in a retracted position, according to an embodiment of the present disclosure;
FIG. 3 illustrates a coupling apparatus, according to an embodiment of the present disclosure;
FIG. 4 illustrates the coupling apparatus, according to an embodiment of the present disclosure;
FIG. 5 illustrates a locking sleeve of the coupling apparatus, according to an embodiment of the present disclosure;
FIG. 6 illustrates a locking sleeve disposed over an actuator, according to an embodiment of the present disclosure;
FIG. 7 illustrates a cross sectional view of the locking sleeve disposed over an actuator;
FIG. 8 illustrates an operation to couple or assemble the tool engagement means and the arm assembly, according to an embodiment of the present disclosure;
FIG. 9 illustrates an operation to couple or assemble the tool engagement means and the arm assembly, according to an embodiment of the present disclosure;
FIG. 10 illustrates an operation to couple or assemble the tool engagement means and the arm assembly, according to an embodiment of the present disclosure;
FIG. 11 illustrates the arm assembly equipped with an apparatus for assembling a work tool to the arm assembly, according to an embodiment of the present disclosure;and
FIG. 12 is a flowchart of a method of assembling the tool engagement to the arm assembly, according to an embodiment of the present disclosure.

### Detailed Description

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

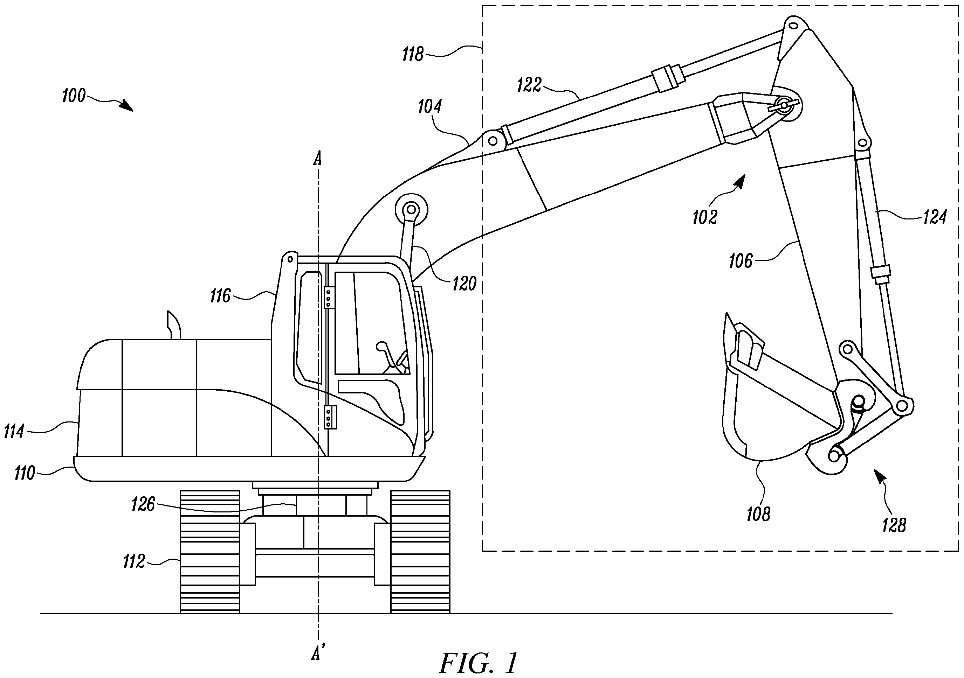

FIG. 1 illustrates a side view of an exemplary machine 100 equipped with an arm assembly 102, according to an embodiment of the present disclosure. The machine 100 may be an excavator, a material handler, a long reach excavator, a foundation drill, a rock drill, a piling machine, a tunneling machine, or a front shovel. In the illustrated embodiment, the machine 100 is shown to be an excavator-type earthmoving or logging machine. Further, the arm assembly 102 includes linkages such as a boom 104, at least one arm, such as a first arm 106, and a work tool 108. The boom 104 may be pivotally connected to a chassis 110 of the machine 100, the first arm 106 may be pivotally connected to the boom 104, and the work tool 108 may be pivotally connected to the first arm 106.

The machine 100 may also include a ground engaging unit 112, such as tracks for propelling the machine 100, a power source 114 to power the arm assembly 102 and the ground engaging unit 112, and an operator cabin 116 for hosting user interface devices for controlling the arm assembly 102 and the ground engaging unit 112. The power source 114 may include an engine, such as a diesel engine, a gasoline engine, a gaseous fuel-powered engine, or any other type of combustion engine known in the art. The power source 114 may alternatively embody a non-combustion source of power such as a fuel cell, a power storage device, or another source known in the art. The power source 114 may produce a mechanical or electrical power output that may then be converted to hydraulic power for moving the arm assembly 102 and the work tool 108.

Further, an overall movement of the work tool 108 in a first vertical plane 118 (shown in FIG. 1) may be achieved in three parts, first by raising and lowering the boom 104 with respect to the chassis 110, second by moving the first arm 106 toward and outward with respect to the operator cabin 116, and third by rotating the work tool 108 relative to the first arm 106. The boom 104 may be raised and lowered by a pair of first hydraulic actuators 120. The first arm 106 may be moved toward and outward with respect to the operator cabin 116 by a second hydraulic actuator 122. In addition, a third hydraulic actuator 124 may be used to turn the work tool 108 relative to the first arm 106. Furthermore, the chassis 110 and the arm assembly 102 may be rotated about a vertical axis A-A' (shown in FIG. 1) by a fourth hydraulic actuator 126, such as a hydraulic motor, with respect to the ground engaging unit 112. According to an aspect of the present disclosure, the machine 100 includes a coupling apparatus 128 for coupling the work tool 108 to the arm assembly 102 and to aid in the turning movements of the work tool 108 with respect to the first arm 106.

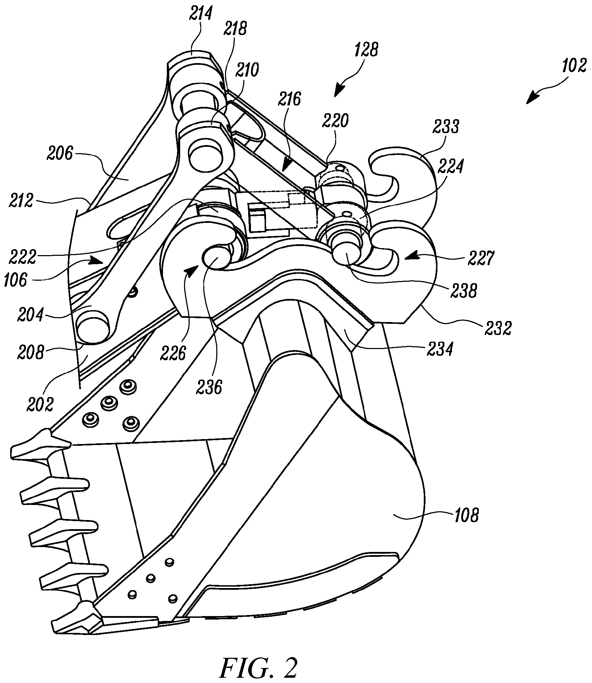

FIG. 2 illustrates the arm assembly 102 and the coupling apparatus 128 operably coupled to the arm assembly 102, in accordance with an embodiment of the present disclosure. As described earlier, the arm assembly 102 includes the first arm 106, which extends longitudinally away from the operator cabin 116. In one example and for the purpose of this description, the first arm 106 is considered to have a rectangular cross-section, and accordingly the first arm 106 has a first side 202 and a second side (not shown) opposite to the first side 202. Further, the arm assembly 102 includes a first connecting arm 204 and a second connecting arm 206. The first connecting arm 204 has a first end 208 and a second end 210. The first end 208 of the first connecting arm 204 is adapted to be attached to the first side 202 of the first arm 106 and the second end 210 of the first connecting arm 204 is disposed distant from the surface of the first arm 106. Similarly, the second connecting arm 206 has a first end 212 and a second end 214. The first end 212 of the second connecting arm 206 is adapted to be attached to the second side of the first arm 106 and the second end 214 of the second connecting arm 206 is disposed distant from the surface of the first arm 106. In one example, the first connecting arm 204 and the second connecting arm 206 may be positioned inclined with a certain angle with respect to the first arm 106.

The arm assembly 102 may further include a second arm 216 having a first end 218 and a second end 220. The first end 218 of the second arm 216 is attached to the second end 210 of the first connecting arm 204 and the second end 214 of the second connecting arm 206. Further, the second end 220 of the second arm 216 is disposed distant from the first end 218; such that the second arm 216 is inclined to the first connecting arm 204 and the second connecting arm 206. In an embodiment of the present disclosure, the first arm 106 may be a stick end of the arm assembly 102, and the second arm 216 may be a push bar.

For the purpose of coupling the coupling apparatus 128 to the arm assembly 102, the arm assembly 102 includes at least one mounting means, such as a first mounting means 222 and a second mounting means 224. In said implementation, the first mounting means 222 is located at the first side 202 of the first arm 106, as shown in FIG. 2. The second mounting means 224 is located at the second end 220 of the second arm 216. The first mounting means 222 and the second mounting means 224 may be, for example, includes passageways formed in, for example, hollow cylindrical components .

In construction, as illustrated in FIG. 2, the work tool 108 includes at least one tool engagement means, such as a first tool engagement means 226 and a second tool engagement means 227. The present embodiment includes a pair of first tool engagement means 226 and a pair of second tool engagement means 227. The first tool engagement means 226 and the second tool engagement means 227 are adapted to be coupled to the first mounting means 222 and the second mounting means 224 respectively. The first and second tool engagement means 226, 227 may includes recesses located on side plates 232 and 233 respectively. In particular, each side plate 232, 233 may include a pair of inwardly facing hooks forming the recesses. Thus the openings of the recesses forming the first tool engagement means 226 may face the openings of the recesses forming the second tool engagement means 227. The side plate 232 and side plate 233 are attached to a base member 234. Further, the base member 234 is adapted to be attached to the work tool 108. In one example, the base member 234 may be welded to the work tool 108. In another example, the first and second tool engagement means 226, 227 may be formed as an integral part of the work tool 108. However, the tool engagement means 226, 227 may be attached to the work tool 108 in various other ways, as would be known to a person skilled in the art, albeit with few variations to the structure of the first and second tool engagement means 226, 227 and the work tool 108 illustrated in FIG. 2.

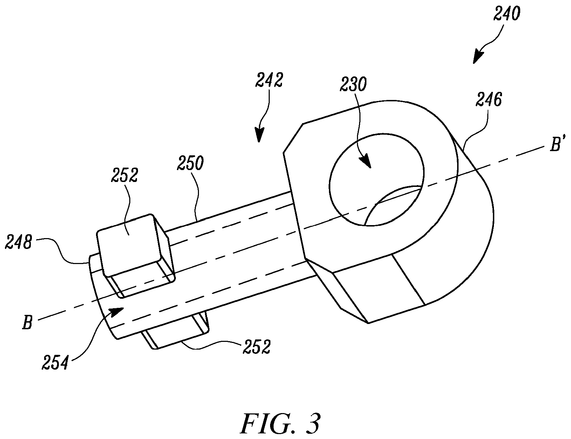

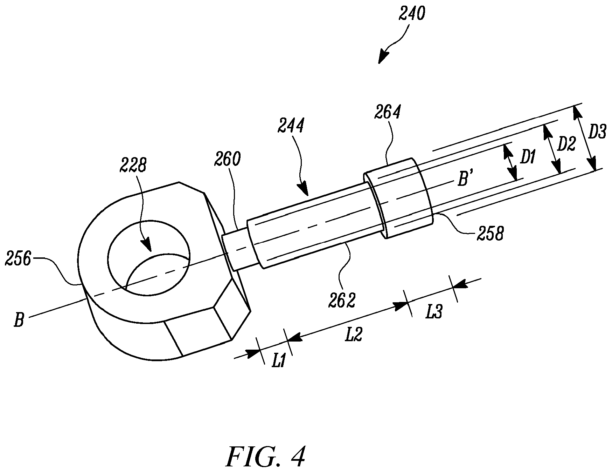

FIGS. 3-5 illustrate the coupling apparatus 128, according to the embodiment of the present disclosure. Reference may also be made to FIG. 2 to describe one or more components of the work tool 108. The coupling apparatus 128 includes an actuator 240. The actuator 240 includes a first member 242 and a second member 244. Further, the actuator 240 defines a longitudinal axis B-B' that passes through the center of the first and second member 242, 244, as shown in FIGS. 3 and 4. In the present embodiment, the first member 242 is circular in cross section. Alternately, the first member 242 can square or rectangle or any other shape according to requirement. The first member 242 includes a first end 246 and second end 248 distal, and separated along axis B-B', from the first end 246. The first end 246 of the first member 242 is provided with a hole 230. The hole 230 is disposed perpendicular to the longitudinal axis B-B' as shown in FIG. 3.

The first member 242 includes an outer surface 250 that extends from the first end 246 to the second end 248. The outer surface 250 includes one or more stops 252. In the present example, the outer surface 250 disposes a pair of stops 252 proximal to the second end 248. Also, the stops 252 are square extrusions. Alternately, there may be multiple stops 252 in any location on the outer surface 252 of circular, rectangular or of any other shape, according to the design requirements. Each stop 252 extends radially perpendicular to the outer surface 250 of the first member 242. The first member 242 further includes a passageway 254 extending therein from the second end 248 as shown. The passageway 254 is disposed such that the longitudinal axis B-B' passes through a center of the passageway 254 as shown. In the present disclosure, the passageway 254 is a circular hole. Alternately, the passageway 254 may be a square, rectangular hole or a hole of any other cross section according to the design requirements.

As best shown in FIG. 4, the second member 244 extends between a first end 256 and a second end 258. The second end 258 of the second member 244 is distal to and separated along longitudinal axis B-B' from the first end 256. In the present embodiment, the second member 244 includes an elongate body 245. In an example the elongate body 245 is cylindrical and substantially round in cross section. In another, example the elongate body 245 can be square rectangle or any other shape according to the design requirements. The elongate body 245 includes a series of different diameters along axis B-B' between the first end 256 and the second end 258. The elongate body 245 includes a first portion 260 having uniform diameter, a second portion 262 of a larger uniform diameter connected to the first portion 260 and a third portion 264 of yet a larger uniform diameter connected to the second portion 262.

In particular, the first portion 260 has a diameter D1 about the longitudinal axis B-B' along a length L1 along the longitudinal axis B-B'. The second portion 262 has a diameter D2 about the longitudinal axis B-B' and a length L2 in the longitudinal direction axis B-B'. The third portion 264 extends between the second portion 262 and the second end 258 with a diameter D3 about the longitudinal axis B-B' and length L3. In the illustrated embodiment L2 is greater than L3 and L3 is greater than LI, although in alternative embodiments the lengths LI, L2, L3 may be equal or different. In the illustrated embodiment D3 is greater than D2 and D2 is greater than D1, although in alternative embodiments the diameters D1, D2, D3 may be equal or different.

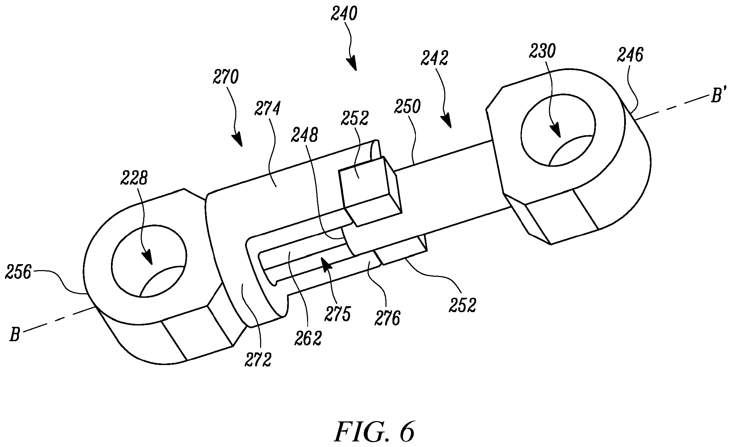

The first and second members 242, 244 are coupled together. As illustrated in FIG. 6, the passageway 254 of the first member 242 slidably receives the second portion 262 and the third portion 264 of the second member 244. The diameter "D3" of the third portion 264 that extends radially from the diameter "D2" of the second portion 262 abuts within a protrusion within the passageway 254. Further, the second member 244 can be relatively displaced along the length L2 of the second portion 262 within the passageway 254. In an example, the relative displacement between the first and second member 242, 244 may be carried out in any way known in the art, such as manually, hydraulically or magnetically.

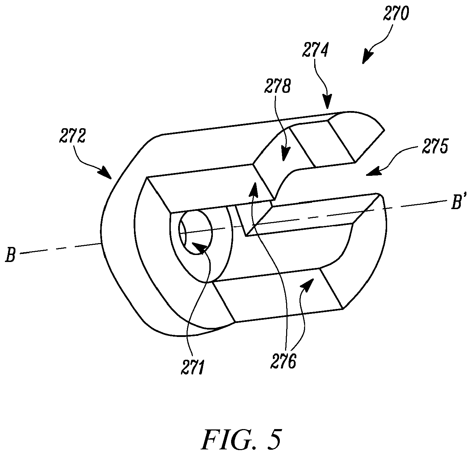

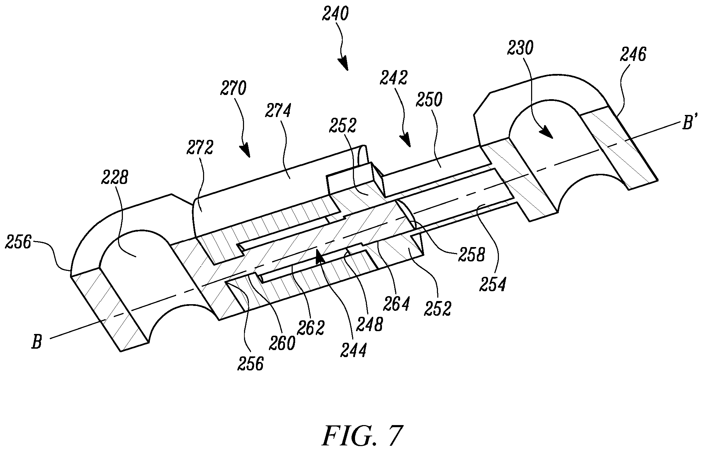

Referring to FIG. 5 to 10, the coupling apparatus 128 further includes a locking sleeve 270. The locking sleeve 270 is mounted over the actuator 240. The locking sleeve 270 includes a first portion 272 and a second portion 274 extending from the first portion 272. The first portion includes a home 271 therethrough (illustrated in FIG. 5). The home 271 receives the first portion 260 of the second member 244, allowing the locking sleeve 270 to turn about the longitudinal axis B-B'. The second portion 274 includes one or more protrusions 276 that extend along the longitudinal axis B-B' from the first portion 272. In the present embodiment, the protrusions 276 dispose a pair of first slot 275 and a second slot 278. The first slot 275 is configured to receive the stops 252 when the second portion 262 is partially or completely received within the passageway 254. The second slot 278 is disposed distal to the first portion 272. The second slot 272 is shaped to receive the stops 252 when the second portion 262 extends from the passageway 254.

The actuator 240 is arranged to move the first and second coupling means 228, 230 between extended and retracted positions as shown in FIG. 2 and FIGS. 8 to 10 by moving the first and second members 242, 244 relative to one another. In an example the retracted position the second portion 262 is partially or completely received within the passageway 254, as shown in FIG. 2. In the retracted position, at least one of the holes 228, 230 is disengaged from the first and/or second tool engagement means 226, 227. In the extended position, the second portion 262 is partially or completely extends out of the passageway 254.

The coupling apparatus 128 includes a first coupling means 236 and a second coupling means 238. The first coupling means 236 is adapted to engage with the first arm 106 and the first tool engagement means 226. The second coupling means 238 is adapted to engage with the second arm 216 and the second tool engagement means 227. In the present disclosure, the first coupling means 236 is a pin member for coupling the first tool engagement means 226 with the hole 228 of the second member 244 and the first mounting means 222 of the first arm 106. The second coupling means 238 is a pin member for coupling the second tool engagement means 227 with the second mounting means 224 of the second arm 216 and the hole 230 of the first member 242. In the present embodiment the first and second coupling means 236, 238 extend outwards from the passageways of the first and second mounting means 222, 224. The first and second coupling means 236, 238 are received within the first and second tool engagement means 226, 227.

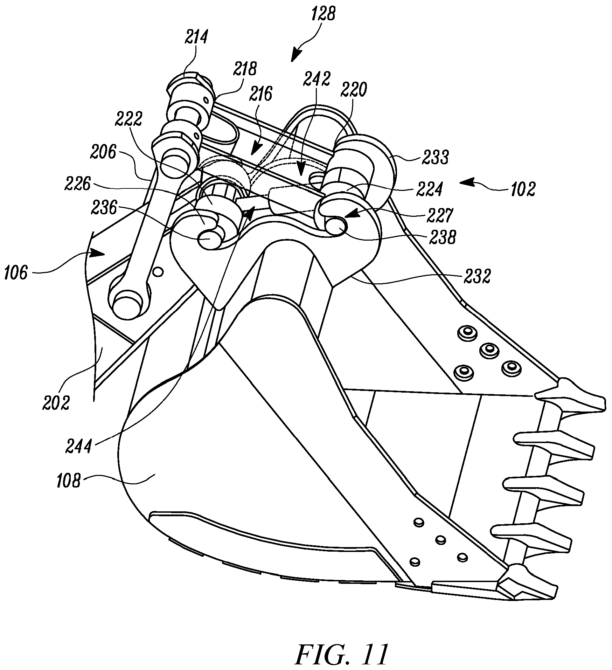

Referring to FIG. 11, the first member 242 includes a cylinder and the second member 244 includes a piston that is movable within the cylinder. Further, the first and second members 242, 244 may be fluidly coupled to a hydraulic circuit (not shown). The hydraulic circuit may be controlled by an operator to retract or extend the first and/or second members 242, 244. In this embodiment, the hydraulic circuit may supply pressurized hydraulic fluid to the cylinder formed within the first member 242, and may force the piston formed in the second member 244 to extend with respect to the first member 242. Further, a restriction to the flow of hydraulic fluid from the cylinder restricts the movement of the first member 242, with respect to the second member 244, thereby locking the actuator 240 in the extended position thereof.

### Industrial Applicability

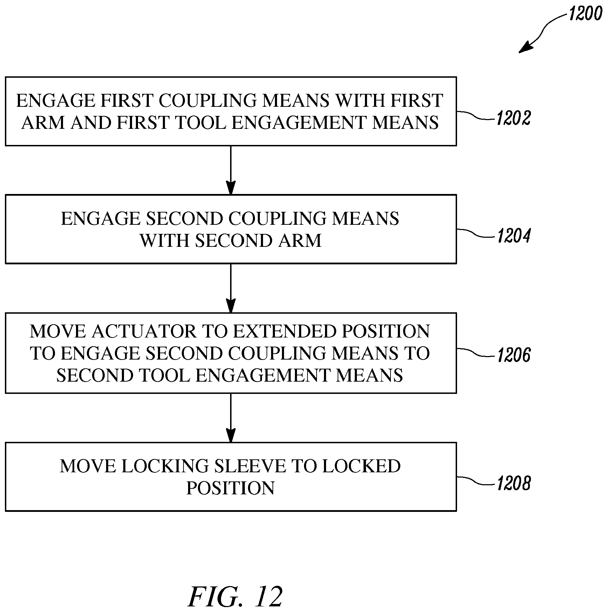

The present disclosure provides the coupling apparatus 128 for assembling the work tool 108 with the arm assembly 102 of the machine 100. The present disclosure further provides a method 1200 for assembling the work tool 108 with the arm assembly 102. FIG. 12 illustrates a flowchart of the method, according to an embodiment of the present disclosure. Further, the method 1200 may be implemented in any suitable hardware, such that the hardware employed can perform the steps of the method 1200 readily and on a real-time basis. For the convenience in description, various steps of the method 1200 will be described in conjunction with the preceding figures of the present disclosure.

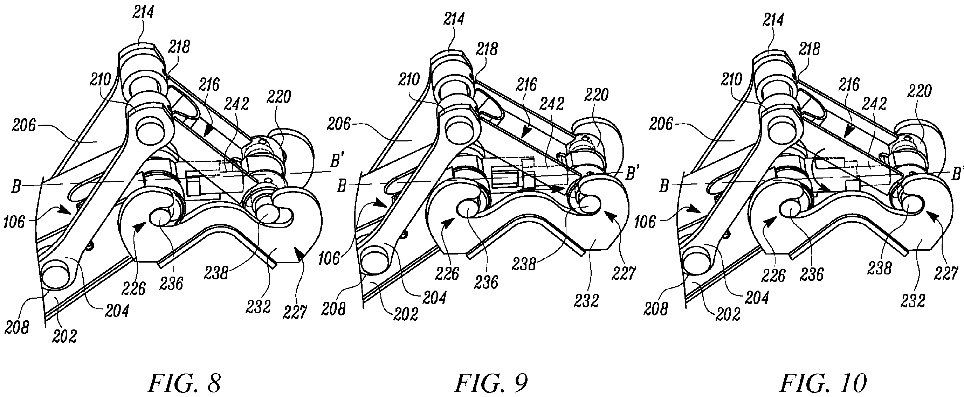

Referring to FIG. 12, at step 1202 of the method 1200, the first coupling means 236 is engaged with the first arm 106 of the arm assembly 102 and first tool engagement means 226. In one example, the actuator 240 is in a retracted position. The first coupling means 236 is aligned with the first mounting means 222. The first coupling means 236 is received within first coupling means 236 and the first mounting means 222. Further, the extended portions of the first coupling means 236 are coupled with the first tool engagement means 226, particularly by being received in the recesses as shown in FIG. 8. At step 1204 the second coupling means 238 is engaged with the second arm 216. The second coupling means 238 is aligned with the second mounting means 224. The second coupling means 238 is received within the second mounting means 224 as shown in FIG. 9.

At step 1206 the actuator 240 is moved to an extended position to engage the second coupling means 238 to the second tool engagement means 227. The first member 242 of the actuator 240 is moved relative to the second member 244 along the longitudinal axis B-B' to move into an extended position. The second coupling means 238 extends further to couple the extended portion of the second coupling means 238 to the second tool engagement means 228, particularly by being received within the recesses.

At step 1208, the locking sleeve 270 is moved to a locked position. The locking sleeve 270 is turned about the abutment portion 260 such that the second portion 274 conforms to the stop 252 of the first member 242 as shown in FIG. 10. The locking sleeve 270 prevents any relative motion such as retraction between the first member 242 and the second member 244 thereby coupling the work tool 108 to the machine 100. In the locked position one or more protrusions 276 of the locking sleeve 270 engages with the stop 252 of the first member 242. Further, the locking sleeve 270 and the stop 252 are arranged such that the motion of the locking sleeve 270 is prevented in at least one direction. In an unlocked position the protrusions 276 allows relative motion between the first and the second member 242, 244. In one embodiment, the locking sleeve 270 may be spring loaded such that the locking sleeve 270 turns to the locked position when the first and second members 242, 244 are at extended position. In another embodiment the locking sleeve 270 may have a different mechanism to lock the actuator 240 such as push, slide, latch and the like.

Therefore, as it would be understood to the person skilled in the art, the coupling apparatus 128 of the present disclosure provides an easy and efficient coupling of the work tool 108 to the arm assembly 102. Since the coupling or the assembling of the work tool 108 and the arm assembly 102 is assisted by the actuator 240 and the locking sleeve 270, the process of coupling can be performed in short duration of time. Further, owing to the presence of flexibility in placing the first and second tool engagement means 226, 227, the coupling apparatus 128 can be replaced or coupled to the arm assembly 102 at any instant of time. Furthermore, since the coupling or the assembling of the work tool 108 and the arm assembly 102 may be carried out by the actuator 240 and locking sleeve 270, provided at the arm assembly 102, overall weight and length of the arm assembly 102 remains substantially same, and therefore capabilities of the machine 100 remain uncompromised.

## Claims

1. An apparatus (128) for coupling a work tool (108) to an arm assembly (102) of a machine (100), the work tool (108) comprising first and second tool engagement means (226, 227) and the arm assembly (102) comprising first and second arms (106, 216), wherein the apparatus (128) comprises:
a first coupling means (236) adapted to engage with the first arm (106) and the first tool engagement means (226), wherein the first coupling means comprises a first pin member;
a second coupling means (238) adapted to engage with the second arm (216) and the second tool engagement means (227), wherein the second coupling means comprises a second pin member; and
an actuator (240) coupled to and arranged to move the first and second coupling means (236, 238) between a retracted position, in which the first and/or second coupling means (236, 238) is disengaged from the first and/or second tool engagement means (236, 238), and an extended position, in which the first and second coupling means (236, 238) are engaged with the first and second tool engagement means (226, 227) the actuator (240) comprising a first member (242) and a second member (244),
wherein a locking sleeve (270) is mounted at least partially around the actuator (240), the locking sleeve (270) being moveable into a locked position to prevent the first and second coupling means (236, 238) from moving into the retracted position from the extended position,
**characterized in that** the first member (242) is moveable relative to the second member (244), the locking sleeve (270) is mounted at least partially around the first and/or the second member (242, 244) and the first member (242) comprises a stop (252) against which the locking sleeve (270) abuts when in the locked position.

2. The apparatus (128) as claimed in claim 1, wherein the second member (244) comprises an abutment portion (260) against which the locking sleeve (270) abuts.

3. The apparatus (128) as claimed in claim 1 or claim 2, wherein the locking sleeve (270) and stop (252) are arranged such that, when in the locked position, rotation of the locking sleeve (270) is prevented in at least one direction.

4. The apparatus (128) as claimed in any one of claims 1 to 3 wherein the first member (242) comprises a cylinder and the second member (244) comprises a piston moveable within the cylinder.

5. The apparatus (128) as claimed in any one of the preceding claims, wherein the locking sleeve (270) includes:
a first portion (272) adapted to abut an abutment portion (260) of the actuator (240); and
a second portion (274) extending from the first portion (272), wherein the second portion (274) includes one or more protrusions (276) extending along the longitudinal axis of the locking sleeve (270), and
wherein the locking sleeve (270) is adapted to rotate about the longitudinal axis between a locked position and an unlocked position.

6. The apparatus (128) as claimed in any one of the preceding claims, wherein the one or more protrusions (276) of the second portion (274) of the locking sleeve (270) engages with the stop (252) of the actuator (240) when the locking sleeve (270) is in the locked position.

7. A machine (100) comprising the apparatus (128) of any one of the preceding claims.

8. A method of coupling a work tool (108) to an arm assembly (102) of a machine (100). the work tool (108) having first and second tool engagement means (226, 227) and the arm assembly (102) having first and second arms (106. 216), the method comprising:
engaging a first coupling means (236) with the first arm (106) and the first tool engagement means (226);
engaging a second coupling means (238) with the second arm (216);
moving an actuator (240) to an extended position to engage the second coupling means (238) to the second tool engagement means (227), the actuator (240) comprising a first member (242) and a second member (244); and.
moving a locking sleeve (270) to a locked position to prevent the first and second coupling means (236, 238) from moving into the retracted position from the extended position
**characterized by** the step of moving the locking sleeve (270) includes rotating the locking sleeve around the actuator (240) to abut against an abutment portion (260) of the second member (244).

9. The method of claim 8, wherein the step of moving the actuator (240) includes moving the first member (242) of the actuator (240) relative to the second member (244) of actuator (240).

## Patentansprüche

1. Vorrichtung (128) zum Koppeln eines Arbeitswerkzeugs (108) mit einer Armanordnung (102) einer Maschine (100), wobei das Arbeitswerkzeug (108) erste und zweite Werkzeugeingriffsmittel (226, 227) umfasst und die Armanordnung (102) erste und zweite Arme (106, 216) umfasst, wobei die Vorrichtung (128) umfasst:
ein erstes Kopplungsmittel (236), das zum Eingriff mit dem ersten Arm (106) und dem ersten Werkzeugeingriffsmittel (226) angepasst ist, wobei das erste Kopplungsmittel ein erstes Stiftelement umfasst;
ein zweites Kopplungsmittel (238), das zum Eingriff mit dem zweiten Arm (216) und dem zweiten Werkzeugeingriffsmittel (227) ausgebildet ist, wobei das zweite Kopplungsmittel ein zweites Stiftelement umfasst; und
ein Stellglied (240), das mit dem ersten und dem zweiten Kopplungsmittel (236, 238) gekoppelt und angeordnet ist, um das erste und das zweite Kopplungsmittel (236, 238) zwischen einer eingefahrenen Position, in der das erste und/oder das zweite Kopplungsmittel (236, 238) von dem ersten und/oder dem zweiten Werkzeugeingriffsmittel (236, 238) gelöst ist, und einer ausgefahrenen Position zu bewegen, in der das erste und das zweite Kopplungsmittel mit dem ersten und dem zweiten Werkzeugeingriffsmittel (226, 227) in Eingriff steht, wobei das Stellglied (240) ein erstes Element (242) und ein zweites Element (244) umfasst,
wobei eine Verriegelungshülse (270) zumindest teilweise um das Stellglied (240) herum angebracht ist, wobei die Verriegelungshülse (270) in eine verriegelte Position bewegbar ist, um zu verhindern, dass sich das erste und das zweite Kopplungsmittel (236, 238) von der ausgefahrenen Position in die eingefahrene Position bewegen, **dadurch gekennzeichnet, dass** das erste Element (242) relativ zu dem zweiten Element (244) beweglich ist, die Verriegelungshülse (270) zumindest teilweise um das erste und/oder das zweite Element (242, 244) herum angebracht ist und das erste Element (242) einen Anschlag (252) umfasst, an dem die Verriegelungshülse (270) anliegt, wenn sie sich in der verriegelten Position befindet.

2. Vorrichtung (128) nach Anspruch 1, wobei das zweite Element (244) einen Anschlagabschnitt (260) umfasst, an dem die Verriegelungshülse (270) anliegt.

3. Vorrichtung (128) nach Anspruch 1 oder Anspruch 2, wobei die Verriegelungshülse (270) und der Anschlag (252) so angeordnet sind, dass in der verriegelten Position eine Drehung der Verriegelungshülse (270) in mindestens eine Richtung verhindert wird.

4. Vorrichtung (128) nach einem der Ansprüche 1 bis 3, wobei das erste Element (242) einen Zylinder umfasst und das zweite Element (244) einen innerhalb des Zylinders beweglichen Kolben umfasst.

5. Vorrichtung (128) nach einem der vorstehenden Ansprüche, wobei die Verriegelungshülse (270) einschließt:
einen ersten Abschnitt (272), der angepasst ist, um an einem Anschlagabschnitt (260) des Stellglieds (240) anzuliegen; und
einen zweiten Abschnitt (274), der sich von dem ersten Abschnitt (272) aus erstreckt,
wobei der zweite Abschnitt (274) einen oder mehrere Vorsprünge (276) einschließt, die sich entlang der Längsachse der Verriegelungshülse (270) erstrecken, und
wobei die Verriegelungshülse (270) angepasst ist, um sich um die Längsachse zwischen einer verriegelten Position und einer entriegelten Position zu drehen.

6. Vorrichtung (128) nach einem der vorstehenden Ansprüche, wobei der eine oder die mehreren Vorsprünge (276) des zweiten Abschnitts (274) der Verriegelungshülse (270) mit dem Anschlag (252) des Stellglieds (240) in Eingriff stehen, wenn sich die Verriegelungshülse (270) in der verriegelten Position befindet.

7. Maschine (100) umfassend die Vorrichtung (128) nach einem der vorhergehenden Ansprüche.

8. Verfahren zum Koppeln eines Arbeitswerkzeugs (108) mit einer Armanordnung (102) einer Maschine (100), wobei das Arbeitswerkzeug (108) erste und zweite Werkzeugeingriffsmittel (226, 227) aufweist und die Armanordnung (102) erste und zweite Arme (106, 216) aufweist, wobei das Verfahren umfasst:
Ineinandergreifen eines ersten Kopplungsmittels (236) mit dem ersten Arm (106) und dem ersten Werkzeugeingriffsmittel (226);
Ineinandergreifen eines zweiten Kopplungsmittels (238) mit dem zweiten Arm (216);
Bewegen eines Stellglieds (240) in eine ausgefahrene Position, um das zweite Kopplungsmittel (238) mit dem zweiten Werkzeugeingriffsmittel (227) in Eingriff zu bringen, wobei das Stellglied (240) ein erstes Element (242) und ein zweites Element (244) umfasst; und.
Bewegen einer Verriegelungshülse (270) in eine verriegelte Position, um zu verhindern, dass sich das erste und das zweite Kopplungsmittel (236, 238) von der ausgefahrenen Position in die eingefahrene Position bewegen
**dadurch gekennzeichnet, dass** der Schritt des Bewegens der Verriegelungshülse (270) das Drehen der Verriegelungshülse um das Stellglied (240) einschließt, um gegen einen Anschlagabschnitt (260) des zweiten Elements (244) anzuliegen.

9. Verfahren nach Anspruch 8, wobei der Schritt des Bewegens des Stellglieds (240) das Bewegen des ersten Elements (242) des Stellglieds (240) relativ zu dem zweiten Element (244) des Stellglieds (240) einschließt.

## Revendications

1. Appareil (128) pour coupler un outil de travail (108) à un ensemble de bras (102) d'une machine (100), l'outil de travail (108) comprenant des premier et deuxième moyens de mise en prise d'outil (226, 227) et l'ensemble de bras (102) comprenant des premier et deuxième bras (106, 216), dans lequel l'appareil (128) comprend :
un premier moyen de couplage (236) adapté pour venir en prise avec le premier bras (106) et le premier moyen de mise en prise d'outil (226), dans lequel le premier moyen de couplage comprend un premier élément de goupille ;
un deuxième moyen de couplage (238) adapté pour venir en prise avec le deuxième bras (216) et le deuxième moyen de mise en prise d'outil (227), dans lequel le deuxième moyen de couplage comprend un deuxième élément de goupille ; et
un actionneur (240) couplé à et agencé pour déplacer les premier et deuxième moyens de couplage (236, 238) entre une position rétractée, où les premier et/ou deuxième moyens de couplage (236, 238) sont libérés du premier et/ou deuxième moyen de mise en prise d'outil (236, 238), et une position étendue, où les premier et deuxième moyens de couplage (236, 238) sont mis en prise avec les premier et deuxième moyens de mise en prise d'outil (226, 227) l'actionneur (240) comprenant un premier élément (242) et un deuxième élément (244),
dans lequel un manchon de verrouillage (270) est monté au moins partiellement autour de l'actionneur (240), le manchon de verrouillage (270) étant mobile dans une position verrouillée pour empêcher les premier et deuxième moyens de couplage (236, 238) de se déplacer vers la position rétractée depuis la position étendue, **caractérisé en ce que** le premier élément (242) est mobile par rapport au deuxième élément (244), le manchon de verrouillage (270) est monté au moins partiellement autour du premier et/ou du deuxième élément (242, 244) et le premier élément (242) comprend un arrêt (252) contre laquelle le manchon de verrouillage (270) vient en butée lorsqu'il est dans la position verrouillée.

2. Appareil (128) selon la revendication 1, dans lequel le deuxième élément (244) comprend une partie de butée (260) contre laquelle le manchon de verrouillage (270) vient en butée.

3. Appareil (128) selon la revendication 1 ou la revendication 2, dans lequel le manchon de verrouillage (270) et l'arrêt (252) sont agencés de telle sorte que, lorsqu'ils sont dans la position verrouillée, une rotation du manchon de verrouillage (270) est empêchée dans au moins une direction.

4. Appareil (128) selon l'une quelconque des revendications 1 à 3 dans lequel le premier élément (242) comprend un cylindre et le deuxième élément (244) comprend un piston mobile à l'intérieur du cylindre.

5. Appareil (128) selon l'une quelconque des revendications précédentes, dans lequel le manchon de verrouillage (270) inclut :
une première partie (272) adaptée pour venir en butée contre une partie de butée (260) de l'actionneur (240) ; et
une deuxième partie (274) s'étendant depuis la première partie (272),
dans lequel la deuxième partie (274) inclut une ou plusieurs saillies (276) s'étendant le long de l'axe longitudinal du manchon de verrouillage (270), et
dans lequel le manchon de verrouillage (270) est adapté pour tourner autour de l'axe longitudinal entre une position verrouillée et une position déverrouillée.

6. Appareil (128) selon l'une quelconque des revendications précédentes, dans lequel l'une ou plusieurs saillies (276) de la deuxième partie (274) du manchon de verrouillage (270) est mise en prise avec l'arrêt (252) de l'actionneur (240) lorsque le manchon de verrouillage (270) est dans la position verrouillée.

7. Machine (100) comprenant l'appareil (128) selon l'une quelconque des revendications précédentes.

8. Procédé de couplage d'un outil de travail (108) à un ensemble de bras (102) d'une machine (100). l'outil de travail (108) ayant des premier et deuxième moyens de mise en prise d'outil (226, 227) et l'ensemble de bras (102) ayant des premier et deuxième bras (106, 216), le procédé comprenant :
la mise en prise d'un premier moyen de couplage (236) avec le premier bras (106) et le premier moyen de mise en prise d'outil (226) ;
la mise en prise d'un deuxième moyen de couplage (238) avec le deuxième bras (216) ;
le déplacement d'un actionneur (240) vers une position étendue pour mettre en prise le deuxième moyen de couplage (238) au deuxième moyen de mise en prise d'outil (227), l'actionneur (240) comprenant un premier élément (242) et un deuxième élément (244) ; et.
le déplacement d'un manchon de verrouillage (270) vers une position verrouillée pour empêcher les premier et deuxième moyens de couplage (236, 238) de se déplacer vers la position rétractée depuis la position étendue
**caractérisé par le fait que** l'étape de déplacement du manchon de verrouillage (270) inclut la rotation du manchon de verrouillage autour de l'actionneur (240) pour venir en butée contre une partie de butée (260) du deuxième élément (244).

9. Procédé selon la revendication 8, dans lequel l'étape de déplacement de l'actionneur (240) inclut le déplacement du premier élément (242) de l'actionneur (240) par rapport au deuxième élément (244) d'actionneur (240).
